(19) Europäisches Patentamt / European Patent Office / Office européen des brevets

(11) **EP 4 443 784 A1**

(12) **EUROPEAN PATENT APPLICATION**

(43) Date of publication:
**09.10.2024 Bulletin 2024/41**

(21) Application number: **24159259.1**

(22) Date of filing: **22.02.2024**

(51) International Patent Classification (IPC):
**H04L 1/00** (2006.01)　　　**H04L 1/1812** (2023.01)

(52) Cooperative Patent Classification (CPC):
**H04L 1/0057; H04L 1/0009; H04L 1/1819**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 GB 202305142**

(71) Applicant: **Nokia Technologies Oy**
**02610 Espoo (FI)**

(72) Inventors:
• **AMIRI, Abolfazl**
  **9220 Aalborg (DK)**

• **PARIS, Stefano**
  **92170 Vanves (FR)**
• **PEDERSEN, Klaus Ingemann**
  **9000 Aalborg (DK)**
• **YANAKIEV, Boyan**
  **9220 Aalborg (DK)**
• **LI, Zexian**
  **02610 Espoo (FI)**

(74) Representative: **Bryers Intellectual Property Ltd**
**Bristol & Bath Science Park**
**Dirac Crescent, Emerson's Green**
**Bristol, BS16 7FR (GB)**

(54) **ERROR CORRECTION**

(57)　An apparatus comprising means for:
enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:
determining at least one correction data transmission based, at least in part, on X of the M data transmissions, wherein X is an integer less than or equal to M; and
enabling transmission of the at least one correction data transmission.

FIG. 3A

EP 4 443 784 A1

**Description**

TECHNOLOGICAL FIELD

Examples of the disclosure relate to error correction. Some examples relate to error correction in radio transmissions.

BACKGROUND

A wireless network comprises a plurality of network nodes including terminal nodes and access nodes. Communication between the terminal nodes and access nodes is wireless. In some circumstances is may be desirable to improve or enhance correction of errors in transmissions in a wireless network.

BRIEF SUMMARY

According to various, but not necessarily all, embodiments there is provided an apparatus comprising means for:

enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:

determining at least one correction data transmission based, at least in part, on X of the M data transmissions, wherein X is an integer less than or equal to M; and
enabling transmission of the at least one correction data transmission.

In some examples, the M data transmissions comprise M uplink data transmissions.
In some examples, determining whether forward error correction should be used in relation to the M uplink data transmissions comprises receiving information configured to allow the apparatus to determine whether forward error correction should be used in relation to the M uplink data transmissions and the means are configured to determine whether forward error correction should be used in relation to the M uplink data transmissions based, at least in part, on the received information.
In some examples, the received information is configured to indicate whether each of the M uplink data transmissions has been successfully received.
In some examples, determining whether forward error correction should be used in relation to the M uplink data transmissions comprises determining whether any of the M uplink data transmissions were not successfully received, and wherein the means are configured to determine that forward error correction should be used in relation to the M uplink data transmissions based on determining that at least one of the M uplink data transmissions was not successfully received.
In some examples, the means are configured to:

determine, based at least in part on the received information, which of the M uplink data transmissions were not successfully received; and
select the X uplink data transmissions for each of the at least one correction data transmission to enable recovery of the uplink data transmissions of the M uplink data transmissions that were not successfully received based, at least in part, on the at least one correction data transmission.

In some examples, the means are configured to, based on determining that forward error correction should not be used for the M uplink data transmissions:
enable transmission of at least one signal configured to indicate that forward error correction is not being used for the M uplink data transmissions.
In some examples, the received information comprises control information configured to indicate whether forward error correction should be used in relation to the M uplink data transmissions.
In some examples, the received information comprises information configured to indicate how many correction data transmissions should be determined, and/or which of the M uplink data transmissions should be selected as the X uplink data transmissions for each correction data transmission, and/or at least one algorithm to be used to determine the at least one correction data transmission.
In some examples, the at least one correction data transmission comprises information to enable recovery of uplink data transmissions of the M uplink data transmissions that were not successfully received.

In some examples, the means are configured to receive configuration information comprising information indicating at least one of the value of M, or at least one forward error correction function.

In some examples, the means are configured to receive at least one signal to schedule radio resources for transmitting the at least one correction data transmission as a dynamic grant or as a configured grant, prior to determining whether forward error correction should be used in relation to the M uplink data transmissions.

In some examples, the means comprises

at least one processor; and
at least one memory including computer program code,
the at least one memory storing instructions that, when executed by the at least one processor, cause performance of the apparatus.

According to various, but not necessarily all, embodiments there is provided an electronic device comprising an apparatus as described herein.

According to various, but not necessarily all, embodiments there is provided a method comprising:

enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:

determining at least one correction data transmission based, at least in part, on X of the M data transmissions, wherein X is an integer less than or equal to M; and
enabling transmission of the at least one correction data transmission.

In some examples, the M data transmissions comprise M uplink data transmissions.

According to various, but not necessarily all, embodiments there is provided a computer program comprising instructions which, when executed by an apparatus, cause the apparatus to perform at least:

enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:

determining at least one correction data transmission based, at least in part, on X of the M data transmissions, wherein X is an integer less than or equal to M; and
enabling transmission of the at least one correction data transmission.

According to various, but not necessarily all, embodiments there is provided an apparatus comprising means for:

receiving M data transmissions from a network node, wherein M is an integer greater than 1;
enabling transmitting information to the network node to enable the network node to determine whether forward error correction should be used in relation to the M data transmissions;
based on it being determined that forward error correction should be used in relation to the M data transmissions:

receiving at least one correction data transmission, wherein the at least one correction data transmission is determined based, at least in part, on X of the M data transmissions, wherein X is an integer less than or equal to M; and
recovering at least one data transmission of the M uplink data transmissions that was not received successfully based, at least in part, on at least one received data transmission of the M data transmissions and the received at least one correction data transmission.

In some examples, the network node comprises a UE and the M data transmissions comprise M uplink data transmissions.

In some examples, the transmitted information is configured to indicate whether each of the M uplink data transmissions has been successfully received.

In some examples, the means are configured to, based on it being determined by the UE that forward error correction should not be used for the M uplink data transmissions:

> receive at least one signal configured to indicate that forward error correction is not being used for the M uplink data transmissions; and
> release radio resources reserved for transmission of at least one correction uplink data transmission.

In some examples, the means are configured to:

> subsequent to receiving the M uplink data transmissions, determine whether forward error correction should be used in relation to the M uplink data transmissions; and
> determine control information configured to indicate to the UE whether forward error correction should be used in relation to the M uplink data transmissions, wherein the transmitted information comprises the control information.

In some examples, determining whether forward error correction should be used in relation to the M uplink data transmissions comprises determining whether any of the M uplink data transmissions were not successfully received, and wherein the means are configured to determine that forward error correction should be used in relation to the M uplink data transmissions based on determining that at least one of the M uplink data transmissions was not successfully received.

In some examples, the means are configured to:

> determine which of the M uplink data transmissions were not successfully received; and
> select the X uplink data transmissions for each correction data transmission to enable recovery of the uplink data transmissions of the M uplink data transmissions that were not successfully received based, at least in part, on the at least one correction data transmission, wherein the control information is configured to indicate the selected X uplink data transmissions.

In some examples, the means are configured to enable transmitting at least one signal to schedule radio resources for transmitting the at least one correction data transmission as a dynamic grant or as a configured grant, prior to it being determined whether forward error correction should be used in relation to the M uplink data transmissions.

According to various, but not necessarily all, embodiments there is provided a method comprising:

> receiving M data transmissions from a network node wherein M is an integer greater than 1;
> enabling transmitting information to the network node to enable the network node to determine whether forward error correction should be used in relation to the M data transmissions;
> based on it being determined that forward error correction should be used in relation to the M data transmissions:
>
>> receiving at least one correction data transmission, wherein the at least one correction data transmission is determined based, at least in part, on X of the M data transmissions, wherein X is an integer less than or equal to M; and
>> recovering at least one data transmission of the M data transmissions that was not received successfully based, at least in part, on at least one received data transmission of the M data transmissions and the received at least one correction data transmission.

According to various, but not necessarily all, embodiments there is provided a computer program comprising instructions which, when executed by an apparatus, cause the apparatus to perform at least:

> receiving M data transmissions from a network node, wherein M is an integer greater than 1;
> enabling transmitting information to the network node to enable the network node to determine whether forward error correction should be used in relation to the M data transmissions;
> based on it being determined that forward error correction should be used in relation to the M data transmissions:
>
>> receiving at least one correction data transmission, wherein the at least one correction data transmission is determined based, at least in part, on X of the M uplink transmissions, wherein X is an integer less than or equal to M; and
>> recovering at least one data transmission of the M data transmissions that was not received successfully based, at least in part, on at least one received data transmission of the M data transmissions and the received at least one correction data transmission.

According to various, but not necessarily all, examples there is provided examples as claimed in the appended claims.

According to various, but not necessarily all, embodiments there is provided an apparatus comprising

at least one processor; and
at least one memory including computer program code;
the at least one memory storing instructions that, when executed by the at least one processor, cause the apparatus at least to perform at least a part of one or more methods disclosed herein.

According to various, but not necessarily all, embodiments there is provided an apparatus comprising means for performing at least part of one or more methods disclosed herein.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described, by way of example only, with reference to the accompanying drawings in which:

FIG. 1 shows an example of the subject matter described herein;
FIG. 2 shows another example of the subject matter described herein;
FIG. 3A shows another example of the subject matter described herein;
FIG. 3B shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10A shows another example of the subject matter described herein;
FIG. 10B shows another example of the subject matter described herein; and
FIG. 11 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

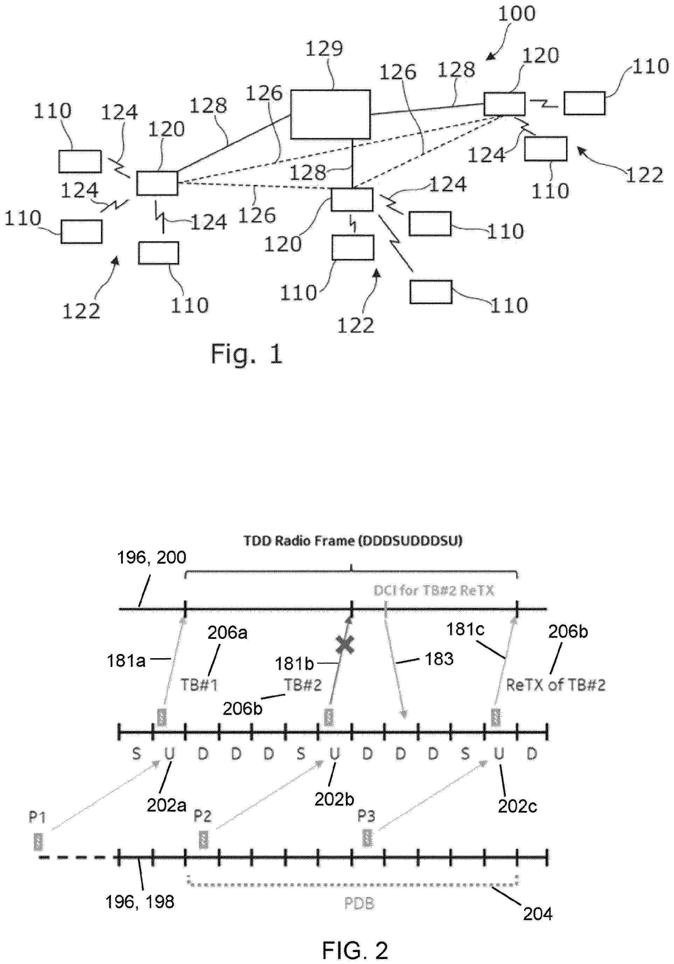

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120. The network 100 is in this example a radio telecommunications network, in which at least some of the terminal nodes 110 and access nodes 120 communicate with each other using transmission/reception of radio waves/signals. The one or more core nodes 129 may, in some examples, communicate with each other. The one or more access nodes 120 may, in some examples, communicate with each other. The network 100 may be a cellular network comprising a plurality of cells 122 each served by an access node 120. In this example, the interface between the terminal nodes 110 and an access node 120 defining a cell 122 is a wireless interface 124. The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations. In examples the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other examples the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an Xn interface 126. The gNBs are also connected by means of the N2 interface 128 to the Access and Mobility management Function (AMF). In examples, the network 100 can comprise a combination of E-UTRAN and NG-RAN.

Information can be transmitted between different network nodes. For example, one or more signals comprising information can be transmitted between a first network node, such as a terminal node 110, and a second, different network node, such as an access node 120. However, it is possible for transmissions between network nodes to fail so that transmitted information is not successfully received by an intended network node. Retransmitting failed transmissions, for example using a hybrid automatic repeat request (HARQ) process, can cause problems in relation to, for example, delay and/or network capacity. For example, retransmission of a failed transmission can cause the information to be received by the intended network node outside of the packet delay budget for the transmission. See, for example, FIG. 2.

FIG. 2 schematically illustrates an example of information being transmitted from a first network node 196 to a second network node 196. In the illustrated example, the first network node 196 is a UE 198 and the second network node 196 is a gNB 200.

In the example of FIG.2, the information being transmitted from the UE 198 to the gNB comprises extended reality pose and/or control information having a packet delay budget (PDB) of 10ms, and is transmitted in transport blocks (TBs) 202. The illustrated scenario has subcarrier spacing (SCS) of 15KHz. In the illustrated example, the radio resources for transmission of the extended reality pose and/or control information transport blocks 202 are scheduled via a configured grant (CG) with a periodicity of 5ms. The pose/control updates are indicated as Pi with i = 1, 2, 3.

In Fig. 2, the first TB 206a is successfully transmitted from the UE 198 to the gNB 200 as an uplink data transmission 181a in the first scheduled uplink slot 202a. However, the first transmission attempt of the second TB 202b, which carries pose packet P2, fails and is scheduled for retransmission in the next uplink slot 202c using downlink control information (DCI) as a downlink data transmission 183. As shown in the example of FIG. 2, for a scenario with subcarrier spacing (SCS) of 15KHz and PDB 204 of 10ms, the retransmission of the second TB 202b is done when the PDB 204 is expired and a new pose information P3 has been generated, thus invalidating the previous pose packet P2. In examples, a network node 196, such as a UE 198, can be configured to effectively and/or intelligently transmit information to allow recovery of lost information due to failed transmissions.

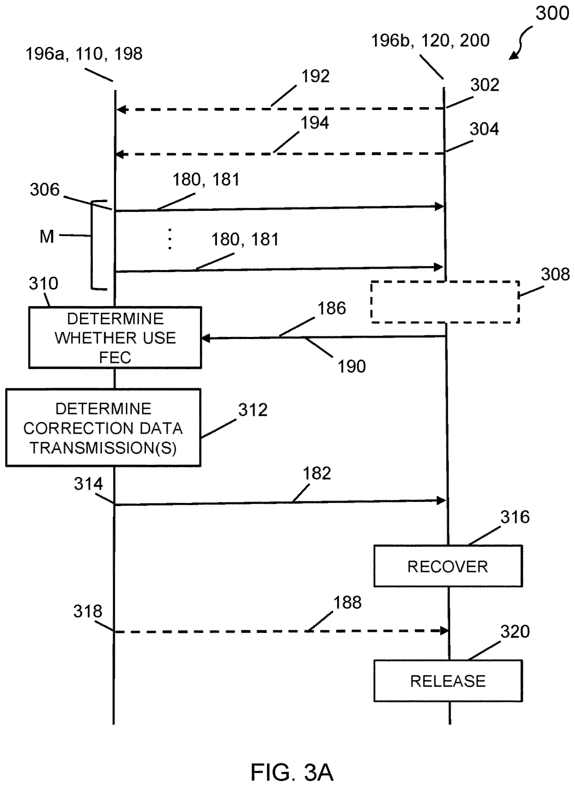

FIG. 3A illustrates an example of a method 300. In examples, FIG. 3A can be considered to illustrate a plurality of methods. For example, FIG. 3A illustrates one or more actions at a plurality of actors/entities. In examples, FIG. 3A can be considered to illustrate a plurality of methods performed by the individual actors/entities. One or more of the features discussed in relation to FIG. 3A can be found in one or more of the other FIGs. In the example of FIG. 3A, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 3A form at least a portion of a network 100 as described in relation to FIG. 1. In the illustrated example, a first network node 196a and a second network node 196b transmit and/or receive one or more signals and/or one or more messages. In the example of FIG. 3A the first network node 196a comprises a terminal node 110 and the second network node 196b comprises an access node 120. In some examples, the terminal node 110 is a UE 198 and the access node 120 is a gNB 200. Accordingly, in some examples, a UE 198 and a gNB 200 transmit and/or receive one or more signals and/or one or more messages. In examples, communications and/or transmissions between elements illustrated in FIG. 3A can proceed via any number of intervening elements, including no intervening elements. Although one UE 168 is illustrated in the example of FIG. 2, in examples any suitable number of UEs 168 can be included. Similarly, in examples, any suitable number of gNBs 200 can be included.

As used herein, a description of an action should also be considered to disclose enabling, and/or causing, and/or controlling that action. For example, a description of transmitting information should also be considered to disclose enabling, and/or causing, and/or controlling transmitting information. For example, a description of an apparatus transmitting information should also be considered to disclose at least one controller of the apparatus enabling, and/or causing, and/or controlling the apparatus to transmit the information. In examples, method 300 and/or at least a part of method 300 can be considered a method of enabling recovery of failed transmissions. In examples, method 300 and/or at least a part of method 300 can be considered a method of improving and/or enhancing retransmission of failed transmissions. In examples, method 300 and/or at least a part of method 300 can be considered a forward error correction method. In the illustrated example, the location of the blocks indicates the entity performing the action(s). For example, block 310 is performed by the first network node 196a, which in the example of FIG. 3A is a UE 198. Blocks 302 and 304 of FIG. 3A will be discussed below.

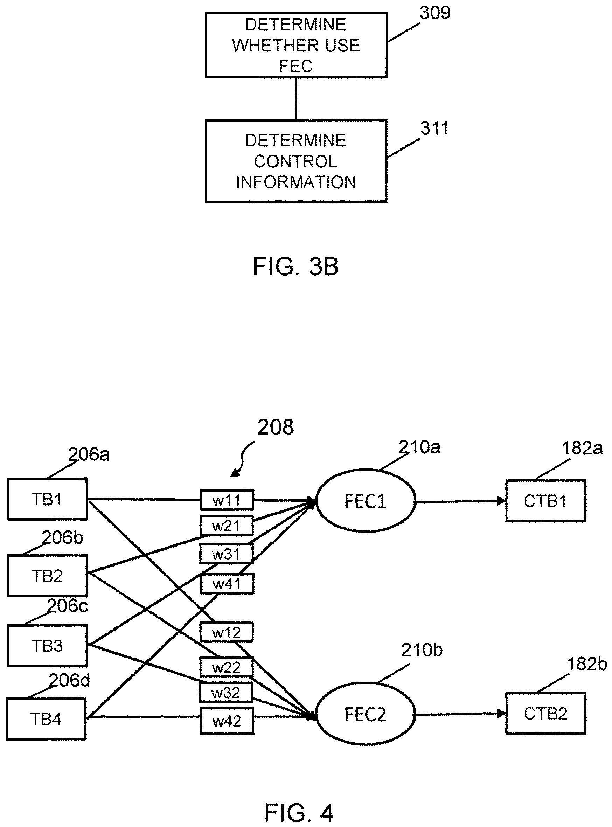

At block 306, method 300 comprises transmitting of M data transmissions 180, wherein M is an integer greater than 1. The M data transmissions 180 are transmitted from the first network node 196a towards the second network node 196b. As FIG. 3A illustrates one or more actions of transmitting, FIG. 3 also illustrates the corresponding transmitting/enabling and/or causing transmitting feature(s)/action(s). For example, from the point of view of the second network node 196b, at block 306, method 300 comprises receiving M data transmissions 180 from a network node 196a, wherein M is an integer greater than 1. Although the M data transmissions 180 are separate transmissions, in examples the M data transmissions 180 can be considered a bundle and/or block of data transmissions. In examples, the M data transmissions can comprise M uplink data transmissions 181 or M downlink data transmissions 183.

In the example of FIG. 3A, the M data transmissions 180 are transmitted from the UE 198 towards the gNB 200 and therefore, in the illustrated example, the M data transmissions 180 comprise M uplink data transmissions 181. In some examples, the M data transmissions 180 are consecutive data transmissions 180. Accordingly, in examples, block 306 can comprise transmitting M consecutive uplink data transmissions from a UE 198 towards a gNB 200. The M data transmissions 180 can comprise any suitable data transmissions 180. In examples, the M data transmissions 180 comprise transmitting M transport blocks (TBs) 206. In examples, the M data transmissions 180 can comprise M uplink physical uplink shared channel (PUSCH) transmissions. The M data transmissions 180 can be considered M transport blocks, and/or M data units, and/or packet transmissions and so on. The data transmissions 180 can comprise any suitable information.

In examples, the data transmissions 180 comprise information that is delay sensitive, for example has a low PDB 204. A low PDB 204 can be considered a PDB of approximately 10ms or less. In examples, the data transmissions 180 comprise information that is generated according to at least one periodic and deterministic process. In examples, the data transmissions 180 comprise information that is delay sensitive and cannot handle delays of legacy HARQ mechanisms. In examples, the data transmissions 180 comprise pose and/or control information. For example, the data transmissions 180 can comprise extended reality uplink pose and/or control information. M can have any suitable value that is an integer greater than 1. In examples, the value of M can be determined by the network, for example by the gNB 200, and configured at the UE 198. In examples, the value of M can be determined based, at least in part, on traffic periodicities for the M data transmissions. For example, the value of M can be determined based on traffic periodicities in uplink (UL) (for example, pose traffic with periodicity Tpose) and downlink (DL) (for example, video traffic with periodicity TDL). For example, the value of M can be determined based at least in part on the relation between UL and DL traffic and determined by M= Ceil (Tpose/TDL), where Ceil stands for the ceiling function. For instance, for an XR video traffic in DL with 60 frames per second (fps) (TDL≈16.67 ms) and UL pose period of 4 ms, then M=4. In examples, the value of M can vary between different bundles/blocks of data transmissions 180. For example, an alternating pattern of values of M can be used to better match the non-integer properties of the exact ratio of the periodicities and to compensate the periodicity drift. For examples, for the example described immediately above, the exact ratio of the periodicities is Tpose/TDL≈ 4.167 and an alternating pattern of M= 4-4-4-5 for a sequence of bundles/blocks of data transmissions 180 can be used to compensate the non-integer part.

In examples, to indicate this alternation, two approaches can be used:

a. Fixed approach: signalling via radio resource control (RRC), so both network nodes 196a,b (for example gNB 200 and UE 198) follow a dynamic bundling starting from the first data transmission 180 (for examples first UL pose PUSCH).

b. Dynamic indication: This can be conveyed every time when a DCI is sent for transmission of a correction data transmission (see blocks 312 and 314).

The radio resources for transmission of the M data transmissions 180 can be scheduled in any suitable way using any suitable method. In examples, the radio resources for transmission of the M data transmissions 180 can be scheduled via at least one configured grant and/or at least one dynamic grant (DG). For example, the M data transmissions 180 can comprise M uplink PUSCH data transmissions 181 the radio resources for which are scheduled via a configured grant. For example, the M data transmissions 180 can comprise M uplink PUSCH data transmissions 181 the radio resources for which are scheduled via dynamic grant. Block 308 will be discussed later.

At block 310, method 300 comprises, subsequent to transmitting the M data transmissions 180, determining whether forward error correction should be used in relation to the M data transmissions 180. Forward error correction can be considered transmitting redundant data/information to enable recovery of data/information that has been lost in earlier transmissions. In examples, block 310 can be considered to comprise, subsequent to transmitting the M data transmissions 180, determining if forward error correction should be used in relation to the M data transmissions 180. In examples, block 310 can be considered to comprise, subsequent to transmitting the M data transmissions 180, determining whether/if at least one additional data transmission based at least in part on at least one of the M data transmissions, should be transmitted to enable recovery of failed data transmissions. Block 310 can be performed in any suitable way using any suitable method.

As discussed above, the M data transmissions 180 can comprise M uplink data transmissions 181, and in the example of FIG. 3A the M data transmissions 180 comprise M uplink data transmissions 181. In some examples, determining whether forward error correction should be used in relation to the M uplink data transmissions 181 comprises receiving information 186 configured to allow determining whether forward error correction should be used in relation to the M uplink data transmissions 181 and block 310 comprises determining whether forward error correction should be used in relation to the M uplink data transmissions 181 based, at least in part, on the received information 186. Accordingly, from the point of view of the second network node 196b, which in the example of FIG. 3A is a gNB 200, block 310 can be considered to comprise transmitting information 186 to the network node 196a to enable the network node 196a to determine whether forward error correction should be used in relation to the M data transmissions 180. The received information 186 can be considered transmitted information 186 from the point of view of the second network node 196b. The received information 186 can comprise any suitable information to allow/enable determining whether forward error correction should be used in relation to the M uplink data transmissions 181.

In some examples, the received information 186 comprises information that can be processed and/or analysed by the first network node 196a, which in the example of FIG. 3A is a UE 198, to allow the first network node 196a to determine whether forward error correction should be used in relation to the M uplink data transmissions 181. In some examples, the received information 186 is configured to indicate/indicates whether each of the M uplink data transmissions 181 has been successfully received. For example, the received information 186 can comprise a response from the gNB 200 indicating whether each of the M uplink data transmissions 181 have been successfully received by the gNB 200. The information 186 can be transmitted in one or more data transmissions. In some examples, the gNB 200 can transmit a HARQ ACK/NACK for each of the M uplink data transmissions 181. In such examples, the information 186 can be considered to comprise the HARQ ACK/NACK information. The use of HARQ ACK/NACK in this way is more suited for dynamic scheduling but can also be used for configured grant.

In examples, at block 310, determining whether forward error correction should be used in relation to the M uplink data transmissions 181 comprises determining whether any of the M uplink data transmissions were not successfully received, and block 310 comprises determining that forward error correction should be used in relation to the M uplink data transmissions 181 based on determining that at least one of the M uplink data transmissions 181 was not successfully received. In some examples, the received information 186 comprises control information 190 configured to control the first network node 196a to perform forward error correction as determined by the second network node 196b. See, for example, block 308 and FIG. 3B.

Accordingly, in some examples, the received information 186 comprises control information 190 configured to indicate whether forward error correction should be used in relation to the M uplink data transmissions 181.

In at least some such examples, method 300 comprises block 308. Block 308 is shown in more detail in FIG. 3B.

The example of FIG. 3B illustrates blocks 309 and 311 of method 300. Accordingly, blocks 309 and 311 can be considered to form at least part of block 308 of method 300. At block 309, method 300 comprises, subsequent to receiving the M uplink data transmissions 181, determining whether forward error correction should be used in relation to the M uplink data transmissions 181. In examples, block 309 can be considered to comprise, subsequent to receiving the M data transmissions 180, determining if forward error correction should be used in relation to the M data transmissions 180. In examples, block 309 can be considered to comprise, subsequent to receiving the M data transmissions 180, determining if at least one additional data transmission based at least in part on at least one of the M data transmissions, should be transmitted to enable recovery of failed data transmissions. Block 309 can be performed in any suitable way using any suitable method.

In some examples, determining whether forward error correction should be used in relation to the M uplink data transmissions 181 comprises determining whether any of the M uplink data transmissions 181 were not successfully received, and block 309 comprises determining that forward error correction should be used in relation to the M uplink data transmissions 181 based on determining that at least one of the M uplink data transmissions was not successfully received. Determining whether any of the M uplink data transmissions 181 were not successfully received can be performed in any suitable way using any suitable method. In examples, determining whether any of the M uplink data transmissions 181 were not successfully received comprises checking and trying to decode them. In examples, checking and trying to decode an uplink data transmission 181 comprises checking the cyclic redundancy check (CRC) and if it fails, then the whole uplink data transmission 181 (for example transport block) can be considered corrupt and un-decodable.

At block 311, method 300 comprises determining control information 190 configured to indicate to the UE 198 whether forward error correction should be used in relation to the M uplink data transmissions 181. In examples, the transmitted information 186 comprises the control information 190. Accordingly, in examples, block 308 can be considered to comprise, subsequent to receiving the M uplink data transmissions 181, determining whether forward error correction should be used in relation to the M uplink data transmissions 181, and determining control information 190 configured to indicate to the UE 198 whether forward error correction should be used in relation to the M uplink data transmissions 181, wherein the transmitted information 186 comprises the control information 190.

The control information 190 can comprise any suitable information to indicate to the first network node 196a/UE198 whether forward error correction should be used in relation to the M uplink data transmissions 181. For example, DCI can be used to indicate to the first network node 196a/UE198 whether forward error correction should be used in relation to the M uplink data transmissions 181. In at least some examples where the second network node 196a, which in the illustrated example comprises a gNB 200, determines and transmits control information 190 to the first network node 196a, which in the illustrated example comprises a UE 198, there is no need for the gNB 200 to transmit HARQ ACK/NACK feedback.

Accordingly, in at least some such examples HARQ ACK/NACK feedback is not provided by the gNB 200 to the UE 198 in relation to the M uplink data transmissions 181. The use of control information 190 in this way is more suited for configured grant as the network does not need to sends explicit ACK/NACK feedback, but can also be used for dynamic grant. Returning to the example of FIG. 3A, at block 312 method 300 comprises based on determining that forward error correction should be used in relation to the M data transmissions: determining at least one correction data transmission 182 based, at least in part, on X of the M data transmissions 180, wherein X is an integer less than or equal to M. Determining the at least one correction data transmission 182 may comprise, for example, generating the at least one correction data transmission 182. Further, the M data transmissions may be consecutive data transmissions.

According to some examples, the method 300 comprises (at block 314) transmitting the at least one correction data transmission 182. For example, the transmitting at block 314 may be based on determining that forward error correction should be used in relation to the M data transmissions 180. A correction data transmission 182 can be considered a transmission comprising information to enable recovery of at least one of the M data transmissions 180 that is not successfully received. For example, the correction data transmission 182 can comprise information determined based, at least in part, on all or a subset of the M data transmissions 180 to enable recovery of at least one of the M data transmissions 180 that was not successfully received based, at least in part, on the correction data transmission 182 and at least one of the M data transmissions 180 that was successfully received. Accordingly, in examples, the at least one correction data transmission 182 comprises information to enable recovery of uplink data transmissions 181 of the M uplink data transmissions 181 that were not successfully received. A correction data transmission 182 can be considered a forward error correction transmission, and/or a transmission recovery transmission, and/or a coded transport block and so on. For example, the correction data transmission 182 may be obtained, by the first network node 196a/UE 198, using forward error correction (e.g. forward error correction algorithm) in accordance with determination that forward error correction should be used. The forward error correction may be applied to all or a subset of the M data transmissions 180 to obtain or determine the correction data transmission 182. Block 312 can be performed in any suitable way using any suitable method.

In examples, determining at least one correction data transmission 182 comprises applying a function/algorithm to at least one of the M data transmissions 180 to combine and/or encode at least one of the M data transmissions for transmission as a correction data transmission. The function can be pre-defined. Any suitable function/algorithm can be used. For example, any suitable function/algorithm can be used to determine at least one correction data transmission 182 configured to enable recovery of uplink data transmissions 181 of the M uplink data transmissions 181 that were not successfully received. For example, any suitable function/algorithm can be used that combines the data transmissions of the M data transmissions 180 in a linearly dependent and reversable manner so that the data transmissions can be recovered again at the receiver. In examples, a bit-wise XOR can be used to combine the X of the M data transmissions to determine a correction data transmission 182. This means, for example, in terms of transport blocks: correction data transmission 182/coded transport block = TB_i (XOR) TBJ (XOR)...

In general the functions/algorithms used to determine the correction data transmission 182 can be constructed on top of finite field theory involving mainly bitwise operations. A function/algorithm used to determine a correction data transmission 182 can be considered a forward error correction (FEC) function/algorithm.

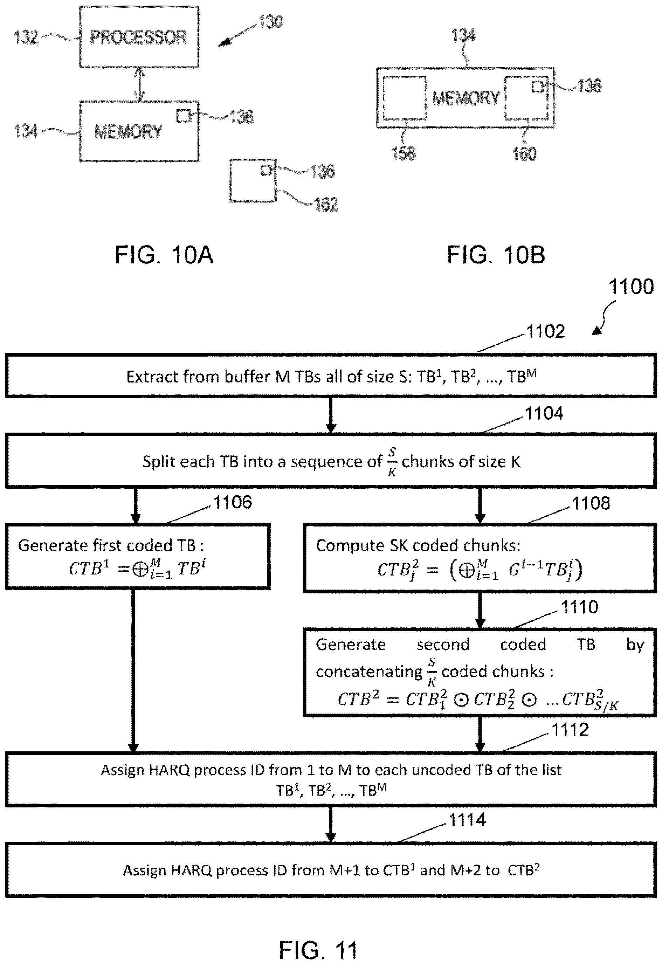

By way of example, reference is made to the example of FIG. 11. FIG. 11 illustrates an example method 1100 of how to generate correction data transmissions 182/coded TBs (CTB) from M data transmissions 180/TBs using a Reed-Solomon FEC code with X=2. In the illustrated example, the parameters used are known to the network and the terminal node 110 by any suitable means. In the example of FIG. 11 the Forward Error Correction, FEC, scheme is used to generate two coded TBs (CTBs)/ correction data transmissions from M uncoded TBs/data transmissions. In block 1102 the M TBs, which have been stored in a buffer, are divided into chunks of size K. The j-th chunk of the i-th uncoded data packet is identified by $M_j^i$. The M TBs all of size S may be represented as M collections of $\frac{S}{K}$ chunks of size K as illustrated in block 1104.

In blocks 1106 and 1108, 1109 two coded data packets are generated using using a Reed-Solomon FEC code. The first coded data packet $CTB^1$ may be obtained (block 1106) as a summation in $GF(2^K)$ of the M TBs stored in the buffer as follows:

$$CTB^1 = \bigoplus_{i=1}^{M} TB^i$$

The second CTB, $CTB^2$, may be generated as the concatenation of $\frac{S}{K}$ coded chunks. Each coded chunk of the CTB may be obtained as a linear combination in $GF(2^K)$ of M chunks from the M TBs. For example, the j-th coded chunk $CTB_j^2$ of the second CTB can be computed (block 1108) as follows:

$$CTB_j^2 = \left( \bigoplus_{i=1}^{M} G^{i-1} TB_j^i \right) = G^0 M_j^1 \oplus G^1 M_j^2 \oplus G^{i-1} M_j^i \oplus \dots G^{M-1} M_j^M$$

where G is the generator of the $GF(2^K)$ signalled using RRC. Then, the second CTB may be obtained (block 1110) by concatenating the $\frac{S}{K}$ coded chunks as follows:

$$CTB^2 = CTB_1^2 \odot CTB_2^2 \odot \dots CTB_{S/K}^2$$

In block 1112 the M uncoded TBs are assigned the first M HARQ process IDs out of L, with L being the maximum number of HARQ processes, whereas the two CTBs are assigned the M+1 and M+2 HARQ process IDs (block 1114).

In the example of FIG. 11, the maximum size of the bundle M is related to the value of K, since $M \leq 2^K - 1$. For example, if K=8 (i.e., chunk size equal to 8 bit), more than 255 uncoded TBs cannot be combined. However, it should be noted that as long as $K \geq ceil(log_2(L - 1))$ the limiting factor will be the maximum number of HARQ processes (i.e., M depends only on L according to $M \leq L - 2$).

Next, reception process using FEC decoding to such examples in presence of transmission errors of a plurality of the M TBs is discussed. Examples such as those discussed in relation to FIG. 11 can recover one or any two transmission errors occurring to the M uncoded TBs:

- In case one uncoded TB is lost due to a transmission error, such as $TB^u$ with $1 \leq u \leq M$, and M-1 distinct uncoded TBs are correctly received, the receiver can decode the lost TB by combining with XOR the N-1 distinct uncoded TBs and the $CTB^1$ as follows:

$$TB^u = \left( \bigoplus_{\substack{i=1, \\ i \neq u}}^{M} TB^i \right) \oplus CTB^1.$$

- In case two uncoded TBs are lost due to a transmission error, such as $TB^u$ and $TB^v$ with $1 \leq u \leq M$, $1 \leq v \leq M$, u>v, and M-2 distinct uncoded TBs are correctly received, the receiver can decode the two lost TBs from $CTB^1$ and $CTB^2$ as follows:

  ∘ Compute $P^{uv} = \left( \bigoplus_{\substack{k=1, \\ k \neq u,v}}^{M} TB^k \right)$ and chop it into chunks of size K. The j-th chunk is identified as $P_j^{uv}$

  ∘ Split the M-2 distinct uncoded TBs into chunks of size K. After this operation there are $(M-2)\frac{S}{K}$ distinct chunks.

  ▪ Combine the j-th chunk of all M-2 TBs as follow $Q_j^{uv} = \left( \bigoplus_{\substack{k=1, \\ k \neq u,v}}^{M} G^{k-1} M_j^k \right)$. Execute this operation for all $\frac{S}{K}$ collections of M-2 chunks.

- Compute $F_1 = \frac{G^{u-v}}{G^{u-v} + I}$ and $F_2 = \frac{G^{-(u-1)}}{G^{u-v} + I}$, where I is the identity element of the multiplication in GF(2^K).
  - Recover the missing data packet TBᵘ as follows:
    - Compute the j-th chunk of TBᵘ as $TB_j^u = F_1$ .

$$\left(CTB_j^1 \oplus P_j^{uv}\right) \oplus F_2 \cdot \left(CTB_j^2 \oplus Q_j^{uv}\right)$$, where $CTB_j^1$ is the j-th chunk of CTB¹ and $CTB_j^2$ is the j-th chunk of CTB²

  - Concatenate all chunks to recover the uncoded TBᵘ as follows: $TB^u = \bigodot_{i=1}^{S/K} TB_j^u$

  - Recover the missing data packet TBᵛ as follows:
    - Compute $TB^v = (P \oplus P^{uv}) \oplus TB^u$

Returning to the example of FIG. 3A, in some examples, the received information 186 is used by the first network node 196a, which in the illustrated example comprises a UE 198, to select the X uplink data transmissions for each of the at least one correction data transmission 182.

Accordingly, in some examples, method 300 comprises determining, based at least in part on the received information 186, which of the M uplink data transmissions 181 were not successfully received, and selecting the X uplink data transmissions for each of the at least one correction data transmission 182 to enable recovery of the uplink data transmission or transmissions 181 of the M uplink data transmissions that were not successfully received based, at least in part, on the at least one correction data transmission 182.

For example, the first network node 196a can use HARQ ACK/NACK responses to determine which of the M uplink data transmissions 181 were not successfully received. In examples, the X uplink data transmissions comprise data transmissions of the M data transmissions 180 that can be used by the second network node 196b with the successfully received data transmissions 180 to recover failed data transmission(s). For example, in case M = 4, and the data transmissions comprise transport blocks TB1, TB2, TB3, TB4, if TB1, TB2 and TB3 are successfully transmitted but TB4 fails, TB1, TB2 and TB4 could be selected as the X data transmissions for determining of a correction data transmission 182. This would allow TB4 to be recovered based on received TB1 and TB2 and the correction data transmission 182.

In some examples, block 310 and/or 312 comprise determining how many correction data transmissions 182 should be determined, and/or at least one algorithm to be used to determine the at least one correction data transmission 182. As discussed above, in some examples, the received/transmitted information 186 can comprise control information 190. See, for example, block 308 and FIG. 3B.

In some examples, method 300 comprises at, for example, block 308, determining which of the M uplink data transmissions 181 were not successfully received; and selecting the X uplink data transmissions for each correction data transmission 182 to enable recovery of the uplink data transmissions 181 of the M uplink data transmissions 181 that were not successfully received based, at least in part, on the at least one correction data transmission 182, wherein the control information is configured to indicate the selected X uplink data transmissions.

Accordingly, in some examples the first network node 196a, which in the example of FIG. 3A comprises a UE 198, can be provided with information regarding the success and failure of the M data transmissions 180 and can determine whether forward error correction is needed. If so, the first network node 196a/UE 198 can select X of the M data transmissions 180 to be used in determining at least one correction data transmission 182. Such examples can be considered UE-centric examples.

Furthermore, in some examples, the second network node 196b, which in the example of FIG. 3A comprises a gNB 200, can monitor the success/failure of the M data transmissions 180 and determine whether forward error correction is needed. If so, the second network node 196b/gNB 200 can select X of the M data transmissions 180 to be used in determining at least one correction data transmission 182 and can indicate the selected X data transmissions in the control information 190.

If not, the second network node 196b/gNB 200 can inform the first network node 196a/UE198. Such examples can be considered network-centric examples.

In at least some examples where the received/transmitted information 186 comprises control information 190 the received/transmitted information 186 comprises information configured to indicate how many correction data transmissions 182 should be determined, and/or which of the M uplink data transmissions 181 should be selected as the X uplink data transmissions for each correction data transmission 182, and/or at least one algorithm to be used to determine the at least one correction data transmission 182. The control information 190 can indicate the X uplink data transmissions for each correction data transmission in any suitable way using any suitable method.

For example, a fixed configuration can be used. In a fixed configuration a fixed weight can be set as default for all the correction data transmissions 183. Such indication can be done for instance using an RRC message. This option is more relevant if the bundle size M and number of correction data transmissions N are fixed. For example, a binary bit-map can be used. In examples, a bit-map of size M can be sent in a new field in the scheduling DCI, for example, to indicate which X of the M uplink data transmissions 181 will be included in the correction data transmission 182 (with, for example, indication of w=1 for those uplink data transmissions 181 to be included. For example, for a bundle size of M=4 and configuring second and the last uplink data transmission 181 to be included, the bit-map can be 0101. In examples, both fixed configuration and binary bit map can work together where an initial configuration is configured upfront during connection establishment (or reconfigured via RRC) and quick adaptation can be achieved using, for example, medium access control control element (MAC CE)/DCI as mentioned above. For example, a direct indication can be used. In examples, a vector of integers of size N in DCI, for example, can be used, where N is the number of correction data transmissions 182, and each element indicates the index of the uplink data transmission 181 to be included. For the example mentioned above (including the second and last transmissions), the indication can be [10,100].

By way of example, reference is made to the example of FIG. 4. FIG. 4 illustrates an example of determining a binary vector for indicating the contribution of the M uplink data transmissions 181 to a correction data transmission 182 (either present or not present). In the example of FIG. 4, a general diagram for the case of M=4 and N=2 (where N is the number of correction data transmissions) for an encoding matrix is shown. In the example, of FIG. 4 the data transmissions 180 are referred to as transport blocks (TBs) 206a to 206d, and correction data transmissions 182 are referred to as coded transport blocks.

As can be seen in the illustrated example, TBs are assigned to the final coded TB with a binary weight 208 (1 for present and 0 for not present in the coded TB). It is worth mentioning that, in examples, the FEC functions combine the present TBs (those with w=1) in a linearly dependent and reversable manner so they can be recovered again at the receiver.

In some examples, the static parameters of the coding scheme can be signalled via for example RRC. These parameters can include at least one of: bundle size M, number of coded TBs N, a vector W of size (M*N) for the binary weights and FEC functions (which can be an algebraic function or an iterative one). In some examples, these parameters can be signalled via a new DCI format. In some examples, the parameters can be sent via RRC at first and modified later via DCI or MAC CE if needed. In the example of FIG. 4, four TBs 206a-d can be used in some combination with two different forward error correction functions to determine two coded transport blocks. For example, if w11=1, w21=1, w31=0, and w41=1, the FEC1 function would be applied to TB1, TB2, and TB4 to determine CTB1. For example, if w12=0, w22=1, w32=0, and w42=1, the FEC2 function would be applied to TB2 and TB4 to determine CTB2. Returning to the example of FIG. 3A, at block 314 method 300 comprises transmitting the at least one correction data transmission 182.

Consequently, FIG. 3A illustrates a method comprising:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

From the point of view of the second network node 196b, block 314 comprises: based on it being determined that forward error correction should be used in relation to the M data transmissions 180, receiving at least one correction data transmission 182, wherein the at least one correction data transmission 182 is determined based, at least in part, on X of the M data transmissions 180, wherein X is an integer less than or equal to M.

At block 316, method 300 comprises recovering at least one data transmission of the M data transmissions that was not received successfully based, at least in part, on at least one received data transmission 180 of the M data transmissions 180 and the received at least one correction data transmission 182.

Consequently, FIG. 3 illustrates a method 300 comprising:

receiving M data transmissions 180 from a network node 196 wherein M is an integer greater than 1;

enabling transmitting information 186 to the network node 196 to enable the network node 196 to determine whether forward error correction should be used in relation to the M data transmissions 180;

based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and

recovering at least one data transmission 180 of the M data transmissions 180 that was not received successfully based, at least in part, on at least one received data transmission 180 of the M data transmissions 180 and the received at least one correction data transmission 182.

Block 316 can be performed in any suitable way using any suitable method. For example, the successfully received data transmission(s) 180 of the M data transmissions 180 can be used in combination with the at least one correction data transmission 182 to recover at least one failed data transmission of the M data transmissions 180.

In examples, the second network node 196b can use knowledge of the function/algorithm used to combine/encode the X data transmissions with the successfully received data transmission(s) 180 and the at least one correction data transmission 182 to recover at least one failed data transmission of the M data transmissions 180. For example, for an FEC function of bitwise XOR, then the receiver (for example second network node/gNB 200) has to apply XOR between the correctly received data transmissions 180ΓΓBs and the correction data transmission(s) 182 to find each bit of the failed TB. In such examples, the FEC function of creating correction data transmission(s) 182 and recovering failed data transmissions 180ΓΓBs are the same. In some examples, the function for creating the correction data and the failure can be different. For instance, if the FEC function is a bitwise right shift and XOR, then the recovery requires XOR and left shift (inverse of the creation function). In examples, if it is determined at block 310 that forward error correction should not be used for the M uplink data transmissions 181, method 300 can proceed to blocks 318 and 320. For example, if it is determined at block 310 that all M uplink data transmissions 181 were successfully received it can be determined that forward error correction should not be used and method 300 can proceed to blocks 318 and 320.

At block 318, method 300 comprises based on determining that forward error correction should not be used for the M uplink data transmissions 181, transmitting at least one signal 188 configured to indicate that forward error correction is not being used for the M uplink data transmissions 181.

The at least one signal 188 can comprise any suitable information to indicate that forward error correction is not being used for the M uplink data transmissions 181. For example, uplink control information (UCI) can be used to indicate that forward error correction is not being used for the M uplink data transmissions 181.

From the point of view of the second network node 196b, block 318 comprises based on it being determined by the UE 198 that forward error correction should not be used for the M uplink data transmissions 181, receiving at least one signal 188 configured to indicate that forward error correction is not being used for the M uplink data transmissions 181.

At block 320, method 300 comprises releasing radio resources reserved/scheduled for transmission of at least one correction uplink data transmission 182.

Accordingly, in examples, method 300 comprises based on it being determined by the UE 198 that forward error correction should not be used for the M uplink data transmissions 181: receiving at least one signal 188 configured to indicate that forward error correction is not being used for the M uplink data transmissions 181; and releasing radio resources reserved for transmission of at least one correction uplink data transmission 181. Accordingly, in examples, if forward error correction is not to be used for the M data transmissions, the radio resources reserved/scheduled for transmission of at least one correction data transmission 182 can be released, increasing network capacity. In some examples, the gNB 200 can configure the UE 198 for performance of method 300.

Accordingly, method 300 can comprise block 302. At block 302, method 300 comprises, at the second network node 196b, determining configuration information 192 comprising information indicating at least one of the value of M, or at least one forward error correction function, and transmitting the configuration information 192 to the UE 198. The configuration information can be transmitted via RRC, DCI or MAC CE.

From the point of view of the UE 198, block 302 comprises receiving configuration information 192 indicating at least one of the value of M, or at least one forward error correction function. In examples, the at least one forward error correction function can be selected for use at block 312. The radio resources for transmitting the at least one correction data transmission 182 can be scheduled in any suitable way, using any suitable method at any suitable time. For example, the radio resources for transmitting the at least one correction data transmission 182 can be scheduled via configured grant and/or dynamic grant.

The radio resources for transmitting the at least one correction data transmission 182 can be prescheduled/pre-reserved prior to it being determined that forward error correction should be used in relation to the M uplink data transmissions 181. In some examples, the radio resources for transmitting the at least one correction data transmission 182 can be scheduled/reserved prior to the M uplink data transmissions being transmitted. Accordingly, in some examples, method 300 comprises block 304.

At block 304, method 300 comprises transmitting at least one signal to schedule radio resources for transmitting the at least one correction data transmission 182 as a dynamic grant or as a configured grant, prior to it being determined whether forward error correction should be used in relation to the M uplink data transmissions.

From the point of view of the first network node 196a/UE 198, block 304 comprises receiving at least one signal to schedule radio resources for transmitting the at least one correction data transmission 182 as a dynamic grant or as a configured grant, prior to it being determined whether forward error correction should be used in relation to the M uplink data transmissions 181. That is, the first network node 196a/UE 198 may receive dynamic grant or configured grant (e.g. from second network node 196b) which may provide (e.g. schedule) radio resources for the at least one correction data transmission 182.

Providing radio resources (as dynamic grant or as a configured grant) to the first network node 196a/UE 198 for transmitting the at least one correction data transmission 182 prior to determining (e.g. prior to step 310 of Figure 3A) whether forward error correction should be used may provide the benefit that the radio resources are readily available for the first network node 196a/UE 198 in the case that the first network node 196a/UE 198 determines that forward error correction is needed (i.e. forward error correction should be used) and determines to transmit the at least one correction data transmission. Thus, such examples may enable the first network node 196a/UE 198 to transmit the correction data timely and efficiently without any unnecessary delay caused by the first network node 196a/UE 198 requesting such resources.

Dynamic grant and/or configured grant for radio resources for transmission of the at least one correction data transmission 182 can be combined in any suitable way with dynamic grant and/or configured grant for radio resources for transmission of the M data transmissions 180.

In examples there are therefore a number of scheduling options that can be used in relation to the at least one correction data transmission 182 and M data transmissions 180. In examples, the at least one correction data transmission 182/coded TBs' scheduling is done via CG.

Case 1: If the original M UL data transmissions 181 is scheduled via a CG, the initial configuration of the CG can add one or more occasions for the coded TBs, which can be PUSCH transmissions (Multi-slot PUSCH CG). These added occasions can be configured to happen after a bundle of M UL PUSCH transmissions.

The maximum size of the bundle, M, (which can be configured by an RRC parameter) and the number of coded TBs N, can be configured via gNB 200, so a CG of total M+N occasions can be configured. If the actual size of the bundle is smaller than M, then gNB can notify the UE (using DCI or MAC CE) of the actual bundle size.

Case 2: In other examples, a separate CG can be configured to carry the coded TB transmissions 180. The periodicity of this CG can be M times the periodicity of the original M uplink data transmission CG. The difference between case1 and case 2 is that with a separate configuration, the gNB 200 has more freedom to choose different CG parameters such as modulation coding scheme (MCS) for the coded TB CG.

For example, the coded TBs 180 can be sent using more conservative MCS (more robust to error).

For this case a new parameter to show the linkage of these two CG configurations is used, so the UE 198 will know that the TBs of the two CGs are related (to mimic the effect of new data indicator used for legacy HARQ retransmissions). The new parameter can have any suitable form. For example, the new parameter can comprise a flag in RRC signaling or at least one bit in DCI. The new parameter can be considered control information to allow a network node 196, such as a UE 198, to identify the purpose of the CGs.

Case3: If the original M uplink data is scheduled via DG for the initial transmission, the added coded TB instances still can be scheduled via CG where the configurations may or may not inherit some configurations (such as MCS) from the corresponding UL DG of the uplink data transmissions 181.

Similar to the above cases, the periodicity can be configured as a function of M consecutive DG-based PUSCH or any other periodicity configured by gNB 200 that can consider the periodicity of the traffic, for example 5ms for pose information. In examples, the at least one correction data transmission 182/coded TBs' scheduling is done via DG.

Case1: If the original M UL data is scheduled via a CG, a DG-based pre-scheduling for the coded TBs can be done. The gNB 200 (depending the RRC configuration of the FEC config) will send a scheduling DCI to notify the UE 198 of the radio resources allocated for the coded TBs 182. Similar to the examples discussed above, discussions about the decision on the bundle size M and MCS selection are also valid for this case.

Case2: If the original M UL data is scheduled via DG, an additional DG-based scheduling for the coded TBs 182 can be done. MCS selection may or may not be inherited from the original M UL data DG.

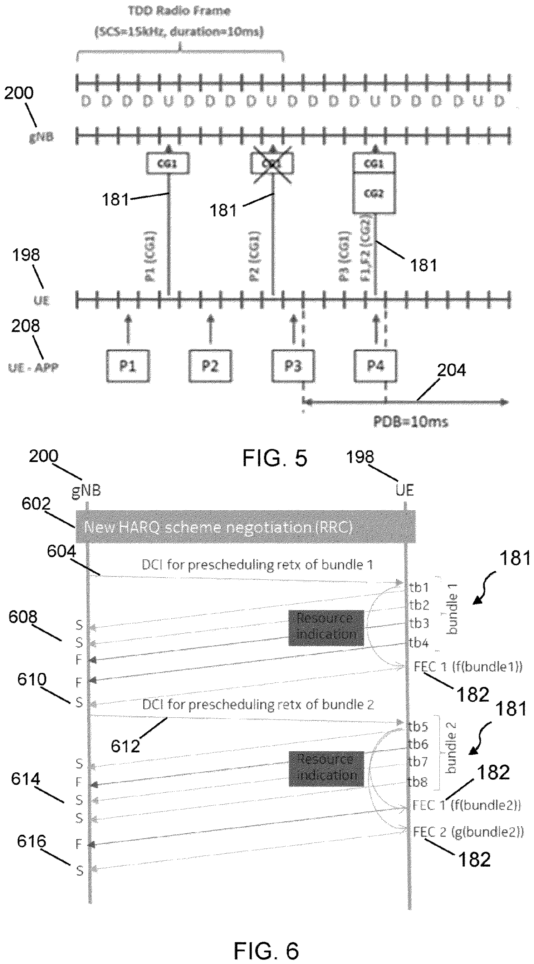

An example where scheduling is done via CG is illustrated in Figure 6. The example of FIG. 6 is similar to the example of FIG. 2, however FIG. 6 illustrates the inventive concepts described herein. In the example of FIG. 6, two CTBs are generated using two functions F1 and F2 (that is N=2) using as input the previous M=3 TBs that carries 3 pose packets (indicated as Pi in the illustrated example). CG1 and CG2 configurations are used for the TB and CTB respectively. CG1 has period equal to the uplink (U) slot (that is, every 5ms in case of SCS=15kHz), whereas CG2 has period three times larger (that is, every 15ms in case of SCS=15kHz). This FEC set-up permits to recover any two transmission errors affecting the bundle of three TBs and the two additional CTBs (that is, it protects against any 2 errors out of 5 transmissions).

Examples of the disclosure works on top of legacy HARQ scheme. This means that, in some examples, the encoding/decoding operations of examples of the disclosure are executed after current HARQ operations like retransmissions, chase combining, and soft-combining. In particular, scenarios can be considered where more time opportunities to grant resources for CTBs, but this depends on traffic characteristics, numerology and time division duplex (TDD) configuration. In some examples, HARQ retransmissions will be eliminated by using network coding (NC) and HARQ ID. In examples, TB and CTBs can be distinguished by using the parameters M and N.

In case of dynamic solution, the HARQ ID can be updated according to the decision (of network or UE). Even if examples are transparent to HARQ operations like retransmissions, sufficient performance in terms of reliability and latency can be obtained when current HARQ retransmissions are disabled.

In examples where HARQ retransmissions are disabled, the HARQ process ID can still be used to identify whether the received TB has been successfully decoded or not. For example, if there is L HARQ processes, $M \leq L$ TBs for the bundle, and $N \leq L - M$ FEC functions (and CTBs), the following rule can be applied to distinguish TBs and CTBs:

- TBs get the HARQ ID as: ((system frame number (SFN) x 10 + subframe) modulo L) modulo M
- CTBs get the HARQ ID as: M + I, where $I \in \{1, ... , N\}$ is the index of the i-th FEC function

Once all M+N buffers have been filled each with a TB or a CTB, the network can recover the M original TBs using the FEC decoding operations according to the parameters and code communicated using RRC signaling.

In some examples, all TBs and CTBs are mapped to the same HARQ process ID. In such examples the FEC-based decoding operation will be executed when the single buffer is filled with M+N TBs and CTBs.

FIG. 4 illustrates an example where a bundle M of size 4 TBs is protected via one or multiple FEC redundant transmissions 182. In the example of FIG. 6. A gNB 200 and a UE 198 transmit and/or receive one or more signals and/or one or more messages across and/or via and/or using a network. At block 602 a new HARQ scheme negotiation is performed. In examples, the gNB 200 transmits configuration information to the UE 198 to configure the UE appropriately. In the example of FIG. 6, an additional DCI (aside from the DCI for the original UL TB transmissions) is sent (blocks 604, 612) for each bundle to preschedule the added FEC transmissions 182 (blocks 610 and 616). In the example of FIG. 6, the M uplink data transmissions 181 are transmitted at blocks 608 and 614. The number of FEC (coded TBs 182) can be configured based on channel conditions, reliability and latency requirements. However, in contrast to a HARQ-less examples, some redundant information is sent proactively to mitigate the effect of possible TB losses.

Table 1 below, shows an example for a case with a TB bundle size M = 4 (a bundle can be considered as a set of TBs that may be protected together via one or more FEC blocks 182 ), and 2 FEC block 182 (N=2). This means that for every M-th PUSCH, there will be N additional resources for repetition. Correction data transmissions 182 can be considered FEC blocks 182.

Table 1

| Iteration/Time | Time [ms] | Resource 1 | Resource 2 | Resource 3 |
|---|---|---|---|---|
| 0 | 0 | TBO | | |
| 1 | 5 | TB1 | | |
| 2 | 10 | TB2 | | |
| 3 | 15 | TB3 | FEC1(TB2,TB1,TB0) | FEC2(TB3,TB2,TB1) |
| 4 | 20 | TB4 | | |
| 5 | 25 | TB5 | | |
| 6 | 30 | TB6 | | |
| 7 | 35 | TB7 | FEC1(TB6,TB5,TB4) | FEC2(TB7,TB6,TB5) |

In the example shown in table 1, TB1 and FEC 1 experience transmission failure. In the example of table 1, FEC1 and FEC2 indicate the additional redundancy blocks that may or may not use the same FEC algorithm. Moreover, FEC(TBi, TBj, TBk), combines and protects TBi, TBj and TBk. As can be seen in the example, failed TB1 in the 1st transmission can be recovered via FEC2(TB3,TB2,TB1), as TB3 and TB2 are received correctly before and can be used at the gNB together with FEC2(TB3,TB2,TB1).

In examples, the transmission of the original TBs and the coded ones can be done in several ways: first, UE can send 3 TBs or 2. a larger TB composed of 1 TB and 2 CTBs. A third option that can be used only in case if there are multiple U slots in between two UL tx, is to dedicate additional time resources or the CTBs. In examples, depending on the new coded TB generation parameters, the physical-layer operations at the UE 198 and gNB 200 will be affected. In examples, the first main change is the removal of the HARQ process, both at UE 198 and gNB 200. Then, in examples, the next change would be to add N new TBs (for the coded information 182) and use the configured FEC scheme to encode them at the UE 198. These new TBs 182 can be generated via a diagram mentioned in FIG. 4, or any other matrix vector with different M,N and FEC function. In examples, at the gNB 200, these CTBs 82 will be decoded and combined with the original copies of the TB (indicated as resource 1 in Table 1) to recover the transmitted TBs 181.

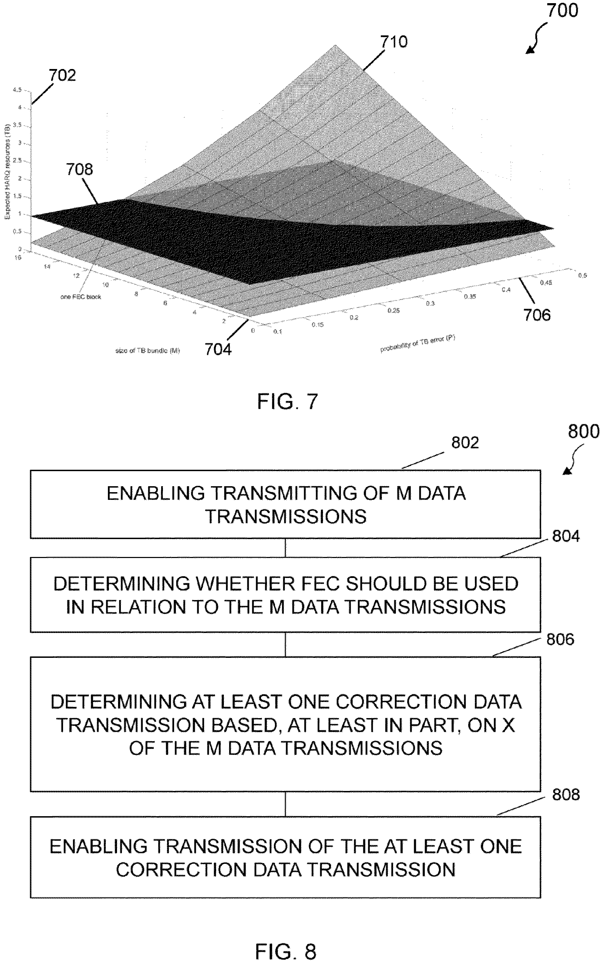

FIG. 8 illustrates analytical results that, in examples, can guide the network to choose the number of coded TBs 182 based on experienced block error rate (BLER) and the TB bundle size M (or, in some examples, how many pose data will be contributing to the next DL video frame). Depending on these guidelines, the network can choose to operate in the low latency regime, where the transmission of added coded TBs 182 have additional overhead compared to legacy HARQ retransmissions, or use more coded TBs to operate the the spectral efficiency (SE) maximization regime.

In the example of FIG. 6, it is assumed that UL pose TBs 181 are identical and uncorrelated and experience similar BLER (indicated with P in the following). Therefore, for each TB bundle of size M, the probability of having K failed TBs follows a binomial distribution as:

$$Pr(TBs\ in\ error\ =\ K) = \binom{M}{K} P^K (1-P)^{M-K}$$

In order to find the extra resources used for HARQ retransmissions, the probability of TBs in error is multiplied by the number of TBs used for the retransmission, that is *ReTx_Overhead = K × Pr(TBs in error = K)*.

To find the expected (average) amount of retransmission overhead, we apply an expectation operator is applied which leads to:

$$X = E\{K \times Pr(TBs\ in\ error\ =\ K)\} = \sum_{K=1}^{M} K/M \times K \times Pr(TBs\ in\ error\ =\ K) = MP^2 + P(1-P)$$

Thus, the formula above shows the expected additional HARQ retransmission size for the legacy HARQ operations. To give some numerical insights, assume M=4 and P=0.1, then, X=0.13, meaning for each bundle of 4 TBs, on average a TB of size 0.52 pose TB is retransmitted.

FIG. 7 illustrates the expected HARQ retransmission size (X) axis 702 as a function of TB bundle size (M) axis 704 and experienced BLER (P) axis 706 compared to adding one FEC TB per bundle.

As can be seen from the example of FIG. 7, gNB can, in examples, use this comparison to decide on the number of the additional coded TBs 182. For the areas below the one FEC block (flat surface), the gNB is in the low latency regime as additional FEC blocks are not increasing SE but reducing additional delays caused by HARQ retransmissions. On the other hand, areas above the flat surface, show the SE maximization regime where aside from the latency improvements, added FEC blocks using less resources than HARQ retransmissions.

Examples of the disclosure propose an approach to proactively protect a selected bundle of the UL TBs using a Forward Error Correction (FEC) scheme operating with TBs as input. In examples, the FEC scheme uses all or a subset of previously transmitted TBs to generate coded packets using pre-defined functions. In examples, all TBs can be recovered successfully provided that enough TBs and coded TBs are successfully delivered.

The scheme improves both reliability and latency of the data transmission in the presence of transmission errors that cause the increase of the transmission latency of periodic traffic. Reducing transmission latency is particularly important for delay-critical services like XR applications where 99% of packets need to be transmitted within the PDB.

In examples, the scheme can be applied both to scheduling policies based on either dynamic grant (DG) or configured grant (CG).

In examples, two solutions (a network-centric and a UE-centric) for the implementation of the dynamic method are described.

- The network-centric dynamic adaptation scheme, which is based on new L1/L2 signaling, requests a certain level of coding redundancy to the UE to recover the UL errors. The requested level of coding redundancy can include the set of TBs that should be coded together and the coding functions to be used.

- In contrast, in the UE-centric dynamic solution, the network informs the UE about transmission erros in UL and the UE autonomously decides the level of coding redundancy to recover those UL errors and whether to cancel the granted resources using new L1/L2 signalling (for example., UCI signalling as included in the Rel-18 WI to indicate unused UL resource and L1 signalling is used to carry coding redundancy information to gNB to avoid complicated blind decoding).

FIG. 8 illustrates an example of a method 800. In examples, method 800 can be performed by any suitable apparatus comprising any suitable means for performing method 800. For example, an apparatus as described in relation to FIG. 10A and/or 10B.

In examples, method 800 can be performed by a network node 196, such as a UE 198 of FIG. 3A. At block 802, method 800 comprises enabling transmitting of M data transmissions 180, wherein M is an integer greater than 1.

At block 804, method 800 comprises subsequent to enabling transmitting of the M data transmissions 180, determining whether forward error correction should be used in relation to the M data transmissions 180.

At block 806, method 800 comprises: based on determining that forward error correction should be used in relation to the M data transmissions 180:

determining at least one correction data transmission 182 based, at least in part, on X of the M data transmissions 180, wherein X is an integer less than or equal to M.

At block 808, method 800 comprises enabling transmission of the at least one correction data transmission 182.

Consequently, FIG. 8 illustrates a method comprising:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

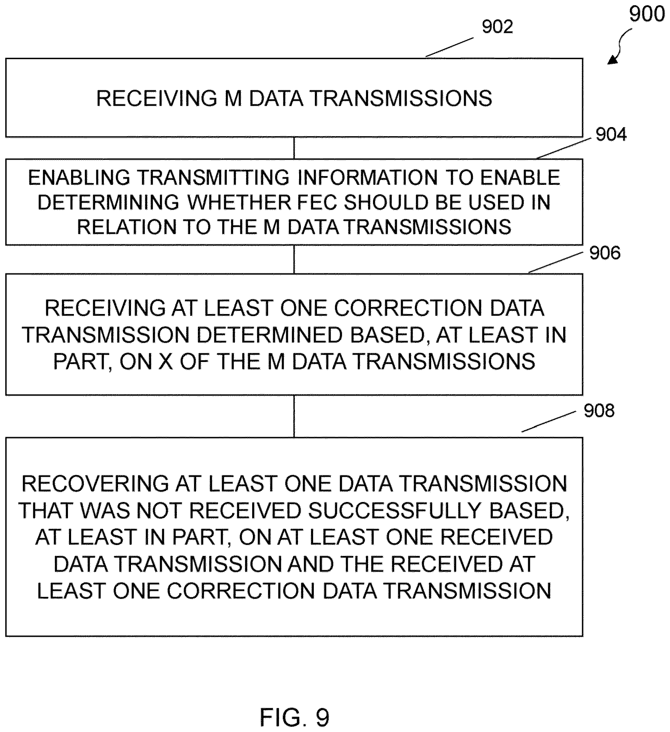

FIG. 9 illustrates an example of a method 900. In examples, method 900 can be performed by any suitable apparatus comprising any suitable means for performing method 900. For example, an apparatus as described in relation to FIG. 10A and/or 10B. In examples, method 900 can be performed by a network node 196, such as a gNB 200 of FIG. 3A.

At block 902, method 900 comprises receiving M data transmissions 180 from a network node 196 wherein M is an integer greater than 1.

At block 904, method 900 comprises enabling transmitting information 186 to the network node 196 to enable the network node 196 to determine whether forward error correction should be used in relation to the M data transmissions 180.

At block 906, method 900 comprises based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M.

At block 908, method 900 comprises, recovering at least one data transmission 180 of the M data transmissions 180 that was not received successfully based, at least in part, on at least one received data transmission 180 of the M data transmissions 180 and the received at least one correction data transmission 182.

Consequently, FIG. 9 illustrates a method comprising:

receiving M data transmissions 180 from a network node 196 wherein M is an integer greater than 1;
enabling transmitting information 186 to the network node 196 to enable the network node 196 to determine whether forward error correction should be used in relation to the M data transmissions 180;
based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and
recovering at least one data transmission 180 of the M data transmissions 180 that was not received successfully based, at least in part, on at least one received data transmission 180 of the M data transmissions 180 and the received at least one correction data transmission 182.

Examples of the disclosure are advantageous and/or provide technical benefits. For example, examples of the disclosure provide for recovering failed data transmissions without introducing excessive/unacceptable delays due to retransmissions. For example, examples of the disclosure provide for a dynamic solution to recovering failed data transmissions based on channel conditions. This provides, for example, benefits in relation to capacity as unrequired radio resources can be released. Where the above description relates to uplink data transmissions, that description is also applicable to data transmissions in general, such as downlink data transmissions.

Fig 10A illustrates an example of an apparatus 130. The apparatus 130 may be a controller of an apparatus of device such as a terminal node 110, for example a UE 198, or access node such as an eNB or gNB 200. The apparatus 130 may be considered a controller.

Implementation of a 130 may be as controller circuitry. The controller 130 may be implemented in hardware alone, have certain aspects in software including firmware alone or can be a combination of hardware and software (including firmware). In some examples, the apparatus 130 is or is comprised in the first network node 196a or UE 198. In some examples, the apparatus 130 is or is comprised in the second network node 196b. As illustrated in Fig 10A the controller 130 may be implemented using instructions that enable hardware functionality, for example, by using executable instructions of a computer program 136 in a general-purpose or special-purpose processor 132 that may be stored on a computer readable storage medium (disk, memory etc) to be executed by such a processor 132.

The processor 132 is configured to read from and write to the memory 134. The processor 132 may also comprise an output interface via which data and/or commands are output by the processor 132 and an input interface via which data and/or commands are input to the processor 132.

The memory 134 stores a computer program 136 comprising computer program instructions (computer program code) that controls the operation of the apparatus 130 when loaded into the processor 132. The computer program instructions, of the computer program 136, provide the logic and routines that enables the apparatus to perform the methods illustrated in the accompanying Figs. The processor 132 by reading the memory 134 is able to load and execute the computer program 136.

In examples, the apparatus 130 comprises:

at least one processor 132; and
at least one memory 134 including computer program code
the at least one memory 134 and the computer program code configured to, with the at least one processor 132, cause the apparatus 130 at least to perform:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

In examples, the apparatus 130 comprises:

at least one processor 132; and
at least one memory 134 including computer program code
the at least one memory 134 and the computer program code configured to, with the at least one processor 132, cause the apparatus 130 at least to perform:

receiving M data transmissions 180 from a network node 196 wherein M is an integer greater than 1;
enabling transmitting information 186 to the network node 196 to enable the network node 196 to determine whether forward error correction should be used in relation to the M data transmissions 180;
based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and
recovering at least one data transmission 180 of the M data transmissions 180 that was not received successfully based, at least in part, on at least one received data transmission 180 of the M data transmissions 180 and the received at least one correction data transmission 182.

In examples, the apparatus 130 comprises:
at least one processor 132; and

at least one memory 134 including computer program code,
the at least one memory storing instructions that, when executed by the at least one processor 132, cause the apparatus at least to:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

In examples, the apparatus 130 comprises:

at least one processor 132; and
at least one memory 134 including computer program code,
the at least one memory storing instructions that, when executed by the at least one processor 132, cause the apparatus at least to:

receiving M data transmissions 180 from a network node 196 wherein M is an integer greater than 1;
enabling transmitting information 186 to the network node 196 to enable the network node 196 to determine whether forward error correction should be used in relation to the M data transmissions 180;
based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and
recovering at least one data transmission 180 of the M data transmissions 180 that was not received successfully based, at least in part, on at least one received data transmission 180 of the M data transmissions 180 and the received at least one correction data transmission 182.

As illustrated in Fig 10A, the computer program 136 may arrive at the apparatus 130 via any suitable delivery mechanism 162. The delivery mechanism 162 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 136. The delivery mechanism may be a signal configured to reliably transfer the computer program 136. The apparatus 130 may propagate or transmit the computer program 136 as a computer data signal.
Computer program instructions for causing an apparatus to perform at least the following or for performing at least the following:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

Computer program instructions for causing an apparatus to perform at least the following or for performing at least the following:

receiving M data transmissions 180 from a network node 196 wherein M is an integer greater than 1;
enabling transmitting information 186 to the network node 196 to enable the network node 196 to determine whether forward error correction should be used in relation to the M data transmissions 180;
based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and
recovering at least one data transmission 180 of the M data transmissions 180 that was not received successfully based, at least in part, on at least one received data transmission 180 of the M data transmissions 180 and the received at least one correction data transmission 182.

The computer program instructions may be comprised in a computer program, a non-transitory computer readable medium, a computer program product, a machine readable medium. In some but not necessarily all examples, the computer program instructions may be distributed over more than one computer program.

Although the memory 134 is illustrated as a single component/circuitry it may be implemented as one or more separate components/circuitry some or all of which may be integrated/removable and/or may provide permanent/semi-permanent/ dynamic/cached storage.

In examples the memory 134 comprises a random access memory 158 and a read only memory 160. In examples the computer program 136 can be stored in the read only memory 158. See, for example, Fig. 10B

Although the processor 132 is illustrated as a single component/circuitry it may be implemented as one or more separate components/circuitry some or all of which may be integrated/removable. The processor 132 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 136. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus 130 can, in examples, comprise means for:

enabling transmitting of M data transmissions 180, wherein M is an integer greater than 1;
subsequent to enabling transmitting of the M data transmissions 180, determining whether forward error correction should be used in relation to the M data transmissions 180;
based on determining that forward error correction should be used in relation to the M data transmissions 180:

determining at least one correction data transmission 182 based, at least in part, on X of the M data transmissions 180, wherein X is an integer less than or equal to M; and
enabling transmission of the at least one correction data transmission 182.

Thus, the apparatus 130 can, in examples, comprise means for:

receiving M data transmissions 180 from a network node 196 wherein M is an integer greater than 1;
enabling transmitting information 186 to the network node 196 to enable the network node 196 to determine whether forward error correction should be used in relation to the M data transmissions 180;
based on it being determined that forward error correction should be used in relation to the M data transmissions 180:

receiving at least one correction data transmission 182, wherein the at least one correction data transmission 182 is determined based, at least in part, on X of the M data transmissions 180, wherein X is an integer less than or equal to M; and
recovering at least one data transmission 180 of the M data transmissions 180 that was not received successfully based, at least in part, on at least one received data transmission 180 of the M data transmissions 180 and the received at least one correction data transmission 182.

In examples, an apparatus 130 can comprise means for performing one or more methods, or at least part of one or more methods, as disclosed herein.

In examples, an apparatus 130 can be configured to perform one or more methods, or at least a part of one or more methods, as disclosed herein.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. Features described in the preceding description may be used in combinations other than the combinations explicitly described above. Although functions have been described with reference to certain features, those functions may be performable by other features whether described or not. Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising means for:

    enabling transmitting of M data transmissions, wherein M is an integer greater than 1;
    subsequent to enabling transmitting of the M data transmissions, determining whether forward error correction should be used in relation to the M data transmissions;
    based on determining that forward error correction should be used in relation to the M data transmissions:

       determining at least one correction data transmission based, at least in part, on X of the M data transmissions, wherein X is an integer less than or equal to M; and
       enabling transmission of the at least one correction data transmission.

2. An apparatus as claimed in claim 1, wherein the M data transmissions comprise M uplink data transmissions.

3. An apparatus as claimed in claim 2, wherein determining whether forward error correction should be used in relation to the M uplink data transmissions comprises receiving information configured to allow the apparatus to determine whether forward error correction should be used in relation to the M uplink data transmissions and the means are configured to determine whether forward error correction should be used in relation to the M uplink data transmissions based, at least in part, on the received information.

**4.** An apparatus as claimed in claim 3, wherein the received information is configured to indicate whether each of the M uplink data transmissions has been successfully received.

**5.** An apparatus as claimed in claim 4, wherein determining whether forward error correction should be used in relation to the M uplink data transmissions comprises determining whether any of the M uplink data transmissions were not successfully received, and wherein the means are configured to determine that forward error correction should be used in relation to the M uplink data transmissions based on determining that at least one of the M uplink data transmissions was not successfully received.

**6.** An apparatus as claimed in claim 4 or 5, wherein the means are configured to:

determine, based at least in part on the received information, which of the M uplink data transmissions were not successfully received; and
select the X uplink data transmissions for each of the at least one correction data transmission to enable recovery of the uplink data transmissions of the M uplink data transmissions that were not successfully received based, at least in part, on the at least one correction data transmission.

**7.** An apparatus as claimed in any of claims 4 to 6, wherein the means are configured to, based on determining that forward error correction should not be used for the M uplink data transmissions:
enable transmission of at least one signal configured to indicate that forward error correction is not being used for the M uplink data transmissions.

**8.** An apparatus as claimed in claim 3, wherein the received information comprises control information configured to indicate whether forward error correction should be used in relation to the M uplink data transmissions.

**9.** An apparatus as claimed in claim 8, wherein the received information comprises information configured to indicate how many correction data transmissions should be determined, and/or which of the M uplink data transmissions should be selected as the X uplink data transmissions for each correction data transmission, and/or at least one algorithm to be used to determine the at least one correction data transmission.

**10.** An apparatus as claimed in any of claims 2 to 9, wherein the at least one correction data transmission comprises information to enable recovery of uplink data transmissions of the M uplink data transmissions that were not successfully received.

**11.** An apparatus as claimed in any of claims 2 to 10, wherein the means are configured to receive configuration information comprising information indicating at least one of the value of M, or at least one forward error correction function.

**12.** An apparatus as claimed in any of claims 2 to 11, wherein the means are configured to receive at least one signal to schedule radio resources for transmitting the at least one correction data transmission as a dynamic grant or as a configured grant, prior to determining whether forward error correction should be used in relation to the M uplink data transmissions.

**13.** A method comprising:

enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:

determining at least one correction data transmission based, at least in part, on X of the M data transmissions, wherein X is an integer less than or equal to M; and
enabling transmission of the at least one correction data transmission.

**14.** A method as claimed in claim 13, wherein the M data transmissions comprise M uplink data transmissions.

**15.** A computer program comprising instructions which, when executed by an apparatus, cause the apparatus to perform at least:

enabling transmitting of M data transmissions, wherein M is an integer greater than 1;
subsequent to enabling transmitting of the M data transmissions, determining whether forward error correction should be used in relation to the M data transmissions;
based on determining that forward error correction should be used in relation to the M data transmissions:

determining at least one correction data transmission based, at least in part, on X of the M data transmissions, wherein X is an integer less than or equal to M; and
enabling transmission of the at least one correction data transmission.

Fig. 1

FIG. 2

FIG. 3A

309

DETERMINE
WHETHER USE
FEC

311

DETERMINE
CONTROL
INFORMATION

FIG. 3B

208

206a

TB1

206b

TB2

206c

TB3

206d

TB4

w11
w21
w31
w41

w12
w22
w32
w42

210a

FEC1

210b

FEC2

182a

CTB1

182b

CTB2

FIG. 4

FIG. 5

FIG. 6

FIG. 7

FIG. 8

**900**

**902**

RECEIVING M DATA TRANSMISSIONS

**904**

ENABLING TRANSMITTING INFORMATION TO ENABLE DETERMINING WHETHER FEC SHOULD BE USED IN RELATION TO THE M DATA TRANSMISSIONS

**906**

RECEIVING AT LEAST ONE CORRECTION DATA TRANSMISSION DETERMINED BASED, AT LEAST IN PART, ON X OF THE M DATA TRANSMISSIONS

**908**

RECOVERING AT LEAST ONE DATA TRANSMISSION THAT WAS NOT RECEIVED SUCCESSFULLY BASED, AT LEAST IN PART, ON AT LEAST ONE RECEIVED DATA TRANSMISSION AND THE RECEIVED AT LEAST ONE CORRECTION DATA TRANSMISSION

FIG. 9

EP 4 443 784 A1

## FIG. 10A

PROCESSOR

132

130

MEMORY

134

136

136

162

## FIG. 10B

MEMORY

134

136

158

160

1100

1102

Extract from buffer M TBs all of size S: $TB^1$, $TB^2$, ..., $TB^M$

1104

Split each TB into a sequence of $\frac{S}{K}$ chunks of size K

1106

Generate first coded TB :
$$CTB^1 = \bigoplus_{i=1}^{M} TB^i$$

1108

Compute SK coded chunks:
$$CTB_j^2 = \left( \bigoplus_{i=1}^{M} G^{i-1} TB_j^i \right)$$

1110

Generate second coded TB by concatenating $\frac{S}{K}$ coded chunks :
$$CTB^2 = CTB_1^2 \odot CTB_2^2 \odot ... CTB_{S/K}^2$$

1112

Assign HARQ process ID from 1 to M to each uncoded TB of the list
$TB^1$, $TB^2$, ..., $TB^M$

1114

Assign HARQ process ID from M+1 to $CTB^1$ and M+2 to $CTB^2$

## FIG. 11

Europäisches
Patentamt

European
Patent Office

Office européen
des brevets

# EUROPEAN SEARCH REPORT

Application Number

EP 24 15 9259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/396275 A1 (ZHU XIPENG [US] ET AL) 17 December 2020 (2020-12-17) <br><br> * paragraph [0088] - paragraph [0093]; figures 6,11 * <br> ----- | 1-5,7,8, 10,11, 13-15 | INV. <br> H04L1/00 <br> H04L1/1812 |
| X | WO 2021/196173 A1 (QUALCOMM INC [US]; LIU KANGQI [CN] ET AL.) 7 October 2021 (2021-10-07) <br> * paragraph [0031] * <br> * paragraph [0079] - paragraph [0094]; figures 3-6 * <br> ----- | 1-6,8-15 | |

TECHNICAL FIELDS
SEARCHED      (IPC)

H04L

The present search report has been drawn up for all claims

| Place of search | Date of completion of the search | Examiner |
|---|---|---|
| Munich | 8 August 2024 | Martínez Martínez, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 9259

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | Publication date | Patent family member(s) | | Publication date |
|---|---|---|---|---|
| US 2020396275 A1 | 17-12-2020 | US | 2020396275 A1 | 17-12-2020 |
| | | WO | 2020251807 A1 | 17-12-2020 |
| WO 2021196173 A1 | 07-10-2021 | CN | 115413405 A | 29-11-2022 |
| | | EP | 4128610 A1 | 08-02-2023 |
| | | US | 2023171032 A1 | 01-06-2023 |
| | | WO | 2021196173 A1 | 07-10-2021 |

EPO FORM P0459

For more details about this annex : see Official Journal of the European Patent Office, No. 12/82